# FASCICULE DE BREVET EUROPEEN

(11) **EP 0 727 893 B1**
(45) Date de publication et mention de la délivrance du brevet: **02.05.2003**
(21) Numéro de dépôt: 96400243.0
(22) Date de dépôt: 02.02.1996
(51) Int. Cl.: H04L 7/02

(54) **Méthode et dispositif pour régénérer, par détection des maxima, un signal d'horloge rythmant la transmission de signaux numérisés reçus**
Verfahren und Vorrichtung zur Regenerierung eines die Übertragung des empfangenen Datensignales taktenden Taktsignales durch Detektion der Maxima
Method and device for regenerating a clock signal, that clocks the transmission of the received data signal, by detection of the maxima

(30) Priorité: 17.02.1995 FR 9501955
(43) Date de publication de la demande: 21.08.1996
(73) Titulaire: INSTITUT FRANCAIS DU PETROLE, 92500 Rueil Malmaison (FR)
(72) Inventeur: Lepage, Thierry, F-78590 Noisy le Roi (FR); Beauducel, Claude, F-60119 Henonville (FR)

(56) Documents cités:
- EP-A- 0 541 431
- WO-A-93/01667
- FR-A- 2 598 868
- GB-A- 2 095 953
- GB-A- 2 269 727
- US-A- 3 820 051
- US-A- 4 675 558
- PATENT ABSTRACTS OF JAPAN vol. 017, no. 559 (E-1445), 7 Octobre 1993 & JP-A-05 160731 (MATSUSHITA ELECTRIC IND CO LTD), 25 Juin 1993,
- PATENT ABSTRACTS OF JAPAN vol. 002, no. 108 (E-055), 8 Septembre 1978 & JP-A-53 073126 (NEC CORP), 29 Juin 1978,

## Description

La présente invention concerne une méthode et un dispositif perfectionnés pour régénérer à partir de signaux captés sur une voie de transmission, un signal d'horloge rythmant la transmission sur cette voie, de données numérisées et codées.

L'invention peut être utilisée dans les systèmes de transmission à codage bipolaire. Elle convient cependant particulièrement bien dans les systèmes de transmission simultanée de plusieurs éléments d'information tels que les systèmes de transmission multi-niveaux.

Dans ce type de transmission, les données numérisées à transmettre sont codées à partir d'un nombre défini de tensions électriques différentes d'amplitude constante. On choisit par exemple 4, 8, 16 ou 32 tensions de codage symétriques deux à deux de part et d'autre de la tension de 0 volt. Ainsi, avec 2ⁿ niveaux par exemple, on peut transmettre simultanément n bits et augmenter ainsi le débit de transmission d'une voie de transmission. Une application de transmission sur un câble utilisant un codage multi-niveaux, est décrite par exemple dans le brevet FR 2.675.974 du demandeur pour optimiser les débits de transfert des signaux sur des câbles de transmission.

Par le brevet FR 2.683.411 (EP 541.431) du demandeur également, on connait un procédé et un dispositif pour restituer un signal d'horloge rythmant la transmission de signaux reçus sur une voie de transmission, notamment pour la transmission hertzienne de signaux sismiques.

Pour restituer ce signal d'horloge, on détecte avec précision les instants de transition de ces signaux par une analyse d'une série d'échantillons prélevés sur les signaux pendant au moins une fraction de la période d'horloge. On détecte les écarts d'amplitude entre les différents échantillons successifs prélevés et on compare la configuration d'écarts obtenue avec des configurations-types observées sur la voie de transmission par des tests préalables et mémorisées dans une mémoire. Si la similitude entre la configuration d'écarts mesurées et une des configurations-types est suffisante, la fenêtre est correctement centrée. Dans le cas contraire, on agit sur une horloge locale pour la resynchroniser.

Cette méthode antérieure fonctionne correctement dans tous les cas où les transitions entre les niveaux successifs sont suffisamment marquées. Dans le cas contraire, ce qui arrive notamment quand la bande passante de la voie de transmission est incompatible ou mal compatible avec le débit de transmission recherché, les zones de transition sont trop dégradées pour que les configurations d'échantillons prélevés dans chaque "fenêtre" puissent correspondre à une configuration-type mémorisée. La resynchronisation d'une horloge locale sur la base des comparaisons effectuées est rendue plus incertaine de ce fait.

Dans les opérations d'exploration géophysique pour relier des appareils d'intervention de fond: instruments de mesure, sondes de puits etc, à une station de commande et d'enregistrement en surface, on utilise généralement des câbles de transmission de bande passante limitée, tels que des câbles électro-porteurs multi-conducteurs.

En utilisant le procédé d'optimisation décrit dans le brevet FR 2.675.974 du demandeur, on sait optimiser le débit des lignes de transmission dans ce type de câble. Pour cela, on dispose en bout de ligne des circuits de correction tels que la fonction de transfert de la ligne corrigée corresponde au moins dans un certain intervalle de fréquence, à celle d'un filtre de référence tel qu'un filtre de Bessel par exemple. La présence de ces circuits de correction permet d'améliorer dans des proportions relativement importantes le débit des lignes de transmission.

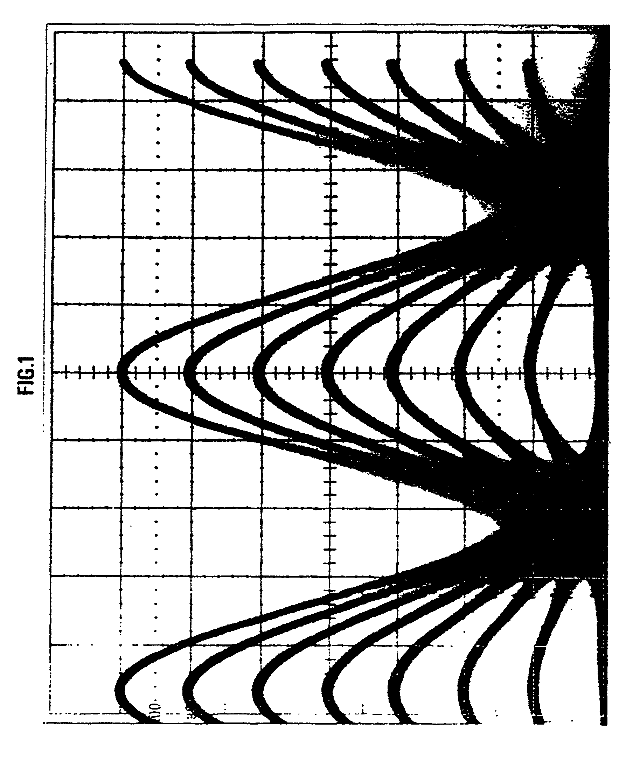

Cependant, on constate lors d'essais de transmission sur ce type de câble soit parce que le débit de transmission est difficilement compatible avec la bande passante naturelle des lignes, soit que la correction qui a pu leur être appliquée, n'est pas optimale, que les signaux présentent une instabilité horizontale (gigue ou "jitter") au voisinage de leurs passages par zéro comme l'illustre la Fig.1, ce qui rend les transitions entre niveaux différents difficilement détectables, et que leurs sommets sont arrondis en forme de sommets de sinusoïde mais avec une position relativement stable cependant. La Fig. 1 met ce phénomène en évidence.

En revanche, on a vérifié que l'on pouvait plus facilement discerner les passages des signaux par leur amplitude maximale dans une fenêtre d'échantillonnage relativement étroite.

Il est connu que l'on peut synchroniser une horloge locale avec celle qui rythme la transmission d'un signal en détectant les instants où la dérivée du signal par rapport au temps s'annule et en ajusatnt l'horloge locale au moyen d'une boucle de verrouillage.

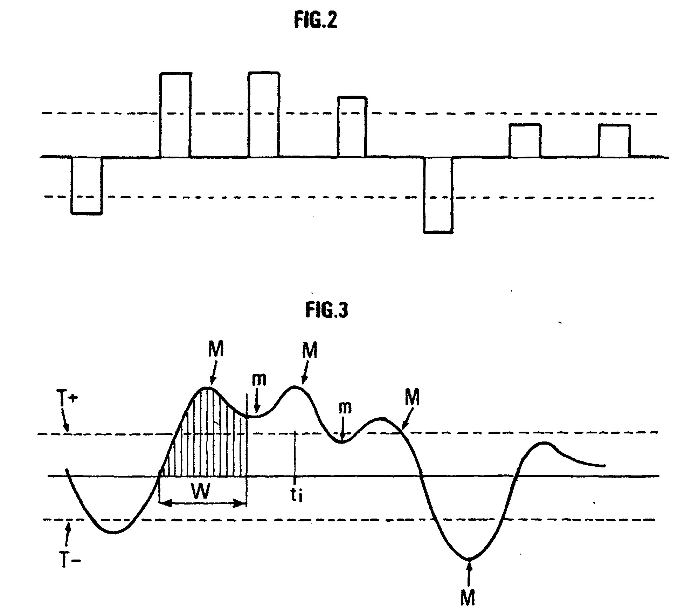

Cependant, dans le cas où le signal reçu est du type multi-niveaux, une telle détection peut conduire (cf. Fig.3) à un calage erroné de l'horloge locale sur des instants intermédiaires où la dérivée change de signe (points m sur la Fig.3) et non sur les sommets réellement représentatifs(sommets M).

La méthode selon l'invention a pour objet de régénérer à partir de signaux captés sur une voie de transmission, un signal d'horloge rythmant la transmission sur cette voie, de données numérisées et codées, de façon à synchroniser sur lui une horloge locale, en évitant les incertitudes de la méthode antérieure, liées dans certaines circonstances, à la localisation des instants de transition entre les signaux., en évitant toute ambiguïté de calage.

Elle comporte le positionnement d'un intervalle de temps ou fenêtre de lecture de ces signaux par référence à l'horloge locale, et elle est caractérisée en ce qu'elle comporte le repérage des sommets des signaux captés par détection sélective des instants où leur dérivée s'annule ou change de signe après une phase de croissance en valeur absolue de ces signaux, et le recentrage éventuel de la fenêtre de lecture sur ces instants par une modification de la fréquence ou de la phase du signal de l'horloge locale.

Le repérage de ces sommets est effectué par exemple en :
- déterminant les écarts d'amplitude entre des échantillons prélevés sur les signaux durant des fenêtres de lecture successives, de façon à obtenir une configuration d'écarts correspondant à chacune de ces fenêtres;
- comparant chaque configuration d'écarts obtenue avec une liste de configurations-types d'écarts reconnues au préalable et répertoriées, correspondant à des fenêtres qui incluent les sommets recherchés; et en
- recentrant éventuellement chaque fenêtre de lecture par application à la fréquence ou à la phase du signal de l'horloge locale, d'une correction prédéterminée associée à chaque configuration-type de la liste, dans le cas où la configuration d'écarts obtenue correspond à une configuration-type répertoriée, cette correction portant par exemple sur un facteur de division d'une fréquence de référence.

La modification de l'horloge locale peut être effectuée en réalisant l'étape de comparaison sur les seuls signaux reçus dont l'amplitude des dits sommets est supérieure à une valeur-seuil, ou en sélectionnant les sommets dont l'amplitude est égale au plus haut niveau des signaux multi-niveaux émis sur la voie de transmission.

La méthode peut comporter avantageusement en outre une mesure de l'amplitude des signaux sensiblement à l'instant correspondant au milieu de chaque fenêtre centrée ou recentrée.

Le dispositif selon l'invention comporte des moyens d'adaptation de l'amplitude des signaux captés et des moyens d'échantillonnage et de numérisation des signaux durant des intervalles de temps ou fenêtres de lecture de ces signaux déterminés par référence à l'horloge locale, et des moyens de centrage adapté à repérer des sommets des signaux captés par détection des instant où leur dérivée s'annule, et à recentrer si nécessaire la fenêtre de lecture sur ces instants par une modification de la fréquence ou de la phase du signal de l'horloge locale.

Il est caractérisé en ce que les moyens de centrage comportent un ensemble pour former durant chaque fenêtre une configuration d'écarts à partir des écarts d'amplitude entre des échantillons prélevés successivement sur les signaux durant la fenêtre et sélectionner des configurations d'écarts incluant un passage par une valeur de dérivée nulle succédant à une phase de croissance en valeur absolue des signaux, et des éléments de comparaison pour comparer chaque ensemble d'écarts obtenu avec une liste de configurations-types d'écarts, et pour appliquer à la fréquence ou à la phase du signal de l'horloge locale, une correction prédéterminée associée à chaque configuration-type de la liste. Ces éléments de comparaison de chaque ensemble d'écarts peuvent comporter par exemple des moyens de formation de mots numériques représentatifs de configurations d'écarts entre les échantillons prélevés dans une même fenêtre et des moyens de mémorisation pour des indications de correction à apporter à la fréquence ou la phase de l'horloge locale.

L'ensemble pour former les configurations d'écarts comporte par exemple des moyens de détermination du sens des écarts entre des échantillons successivement prélevés et numérisés et des moyens de repérage des maxima en tenant compte du signe des échantillons numérisés.

L'horloge locale comporte en série par exemple un premier élément de division d'une fréquence de référence par un facteur de division ajustable, connecté aux dits moyens de comparaison, un deuxième élément de division avec un facteur de division m, produisant un signal à la fréquence de succession des bits, et un troisième élément de division avec un facteur de division n, produisant un signal à la fréquence de succession des bauds.

De préférence le dispositif comporte des moyens de sélection des signaux dont l'amplitude excède une valeur-seuil fixée, et aussi un indicateur de mise en phase ou verrouillage pour un système d'exploitation des signaux validés.

Il peut comporter aussi en outre des moyens de détection de l'amplitude des signaux reçus sensiblement à l'instant correspondant au milieu de la fenêtre centrée ou recentrée.

Avec cette discrimination qui est faite entre les instants où la dérivée s'annule pour ne retenir que ceux correspondant véritablement à des sommets positifs ou négatifs des signaux multi-niveaux reçus, on est sûr que la fenêtre de réception finit par se centrer sans équivoque sur ces sommets et mettre en phase par conséquent l'horloge locale.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où :
- la Fig.1 montre une superposition de signaux d'amplitudes différentes, détectés lors d'une transmission de type multi-niveaux sur un câble de transmission de puits, où les zone de transition entre niveaux sont rendues difficilement repérables et impropres à la détection du signal d'horloge qui rythme leur transmission;
- la Fig.2 montre schématiquement un signal multi-niveaux codé que l'on applique à une ligne de transmission;
- la Fig.3 montre schématiquement les déformations qui peuvent affecter ce même signal après une propagation sur une ligne; et
- la Fig.4 montre schématiquement un mode de réalisation du dispositif.

Un signal multi-niveaux est constitué (Fig.1) à partir d'un certain nombre de tensions électriques d'amplitudes déterminées. A chacun de ses paliers d'amplitude successifs, correspond une combinaison particulière de signaux binaires qui peuvent être transmis simultanément sur une voie de transmission, comme il est bien connu des spécialistes. La détermination précise du niveau de chacun des paliers successifs du signal reçu sur cette voie, permet de restituer les signaux binaires transmis.

Cette discrimination des différents niveaux est rendue plus délicate dans la pratique, car après propagation sur une voie de transmission, avec un débit de transmission élevé compte-tenu de la bande passante, les paliers du signal multi-niveaux initial (Fig.2), sont arrondis comme schématisé sur la Fig.3. Elle est d'autant plus difficile à faire que le nombre de niveaux distincts à reconnaître est important et les écarts entre les niveaux relativement faibles.

Pour éviter toute erreur dans la reconnaissance du niveau, il importe que l'instant où l'on mesure l'amplitude maximale atteinte, soit bien cadré sur les sommets successifs.

Selon l'invention, cette condition est réalisée essentiellement en positionnant une fenêtre W de lecture des signaux reçus par référence à une horloge locale, en repérant des sommets M de ces signaux captés par détection des instants où sa dérivée change de signe ou s'annule, et le centrage de la fenêtre de lecture sur ces instants (ou sa rectification si nécessaire) par une modification de la fréquence ou de la phase du signal de l'horloge locale.

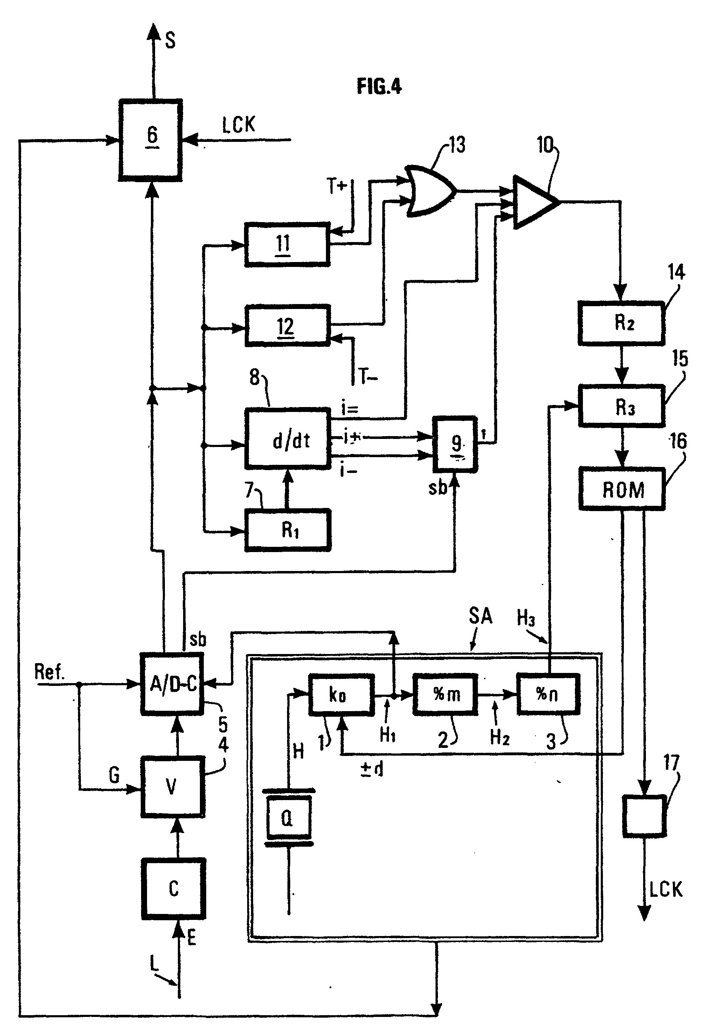

Le dispositif selon l'invention reçoit des signaux codés rythmés par un signal d'horloge sur une voie de transmission L (Fig.4) constituée par exemple d'une ligne de transmission. éventuellement optimisée par des circuits de correction C en accord avec le procédé tel que décrit dans le brevet FR 2.675.974 précité. Les circuits de correction C ont pour effet que la largeur de la réponse impulsionnelle du câble quand ils lui sont connectés, est du même ordre de grandeur que la période de l'horloge rythmant la transmission des bauds sur la lignes L.

Ces signaux arrivent codés par exemple suivant le code ANSI connu des spécialistes, avec des inversions de polarité réparties régulièrement de façon que dans un intervalle de temps défini, on puisse disposer d'un maximum et d'un minimum d'amplitude, et leur composante continue est nulle.

Le positionnement de la fenêtre W est effectué par une horloge locale et son centrage de la fenêtre W est effectué essentiellement par rapport à l'instant ti où l'on détecte le changement du signe de la dérivée du signal. Comme l'instabilité horizontale ou gigue est plus importante sur les signaux de faible amplitude, on ne retient de préférence pour le calcul de la dérivée que ceux dont l'amplitude dépasse un certain seuil fixé T, et on ne tient compte que des maxima de la valeur absolue et non des minima m, comme le montre la Fig.3.

Le positionnement des fenêtres est réalisé par exemple par le dispositif ci-après décrit tel qe schématisé à la Fig.4.

Il comporte un ensemble de synchronisation SA comportant trois étages diviseurs de fréquence 1, 2, 3 connectés en série recevant un signal à haute fréquence H émis par un quartz Q. Le premier étage diviseur 1 applique un facteur de division k pouvant varier entre trois valeurs k0, (k0 - d) et (k0 + d) et produit un premier signal d'horloge H1. Le deuxième et le troisième étage 2, 3 appliquent respectivement un deuxième facteur m et un troisième facteur de division n l'un et l'autre fixes, et produisent respectivement un deuxième et un troisième signal d'horloge H2, H3. La fréquence du quartz et les facteurs de division m et n sont choisis de façon que la fréquence du signal H2 corresponde à la fréquence de réception des bits sur la ligne L, tandis que celle du signal H3 corresponde à la fréquence de réception des bauds de signal. La largeur de la fenêtre W est choisie par exemple égale à la période du signal H3.

Après passage dans les circuits C, les signaux reçus sur la ligne L, codés suivant un code bipolaire et sans composante continue, sont appliqués à un amplificateur (AGC) à contrôle automatique de gain 4. Après amplification, ils sont échantillonnés (Fig.3) et numérisés dans un convertisseur analogique-numérique A/D-C 5 piloté par le signal d'horloge H1. La fréquence de ce signal H1 est appliquée au convertisseur A/D-C 5, est choisie pour avoir une résolution de signal échantillonné suffisamment fine.Une même tension de référence VR est appliquée à l'amplificateur 4 et au convertisseur A/D-C 5. Les signaux numérisés sont ensuite appliqués à un décodeur de signal 6 qui mesure les niveaux successifs des signaux multi-niveaux reçus et qui les décode pour reconstituer les données qui ont été transmises sur la ligne. Il est piloté par les signaux d'horloge issus de l'ensemble SA.

Le recentrage permanent de la fenêtre de lecture W par mise en phase des signaux de l'ensemble local de synchronisation SA avec le signal d'horloge rythmant la transmission sur la ligne L, est effectué comme suit, par détection des instants où la dérivée change de signe ou pour le moins s'annule et donc de la position des sommets successifs des signaux.

Chaque échantillon de signal numérisé issu du convertisseur A/D-C 5 est chargé dans un registre 7 et comparé avec son suivant immédiat dans un comparateur 8. Les résultats de ces comparaisons successives sont délivrés sur trois sorties différentes suivant que les incréments sont positifs (i+), négatifs (i-) ou sont nuls (i=). Les incréments i+ et i- ainsi que le bit de signe sb issus du convertisseur 5 sont appliqués à un détecteur de maxima 9. A la détection à la fois d'un passage par une valeur de dérivée nulle (i=) succédant à une phase de croissance en valeur absolu du signal, le détecteur 9 émet un 1 logique indicatif d'un maximum M, qui est appliqué sur une entrée d'une porte ET 10.

Les mots numérisés issus du convertisseur A/D-C 5 sont également appliqués en parallèle à deux comparateurs 11, 12 à seuils respectifs T+ et T- (Fig.3) Les signaux de détection de seuil issus de ces deux comparateurs sont appliqués, à travers une porte OU 13, à une deuxième entrée de la porte ET 10. Une troisième entrée de celle-ci reçoit les signaux i= issus du comparateur 8.

Les bits successifs délivrés par la porte ET 10 sont formés en mots numériques (de 12 bits par exemple), dans un registre à décalage R2 (14).

Compte-tenu de la sélection opérée par les éléments 7 à 13 précédents, ces mots sont représentatifs des écarts d'amplitude entre les m.n échantillons al à am.n qui sont prélevés successivement dans chacune des fenêtres W encadrant un maximum M (Fig.3).

A une fréquence fixée par le signal d'horloge H2, correspondant à celle de chaque baud transmis, les mots sont transférés dans un troisième registre R3 (15).

L'opération de positionnement de la fenêtre W est effectué en vérifiant que la configuration de 1 et de 0 logiques de chaque mot dans le registre R3 est correcte en la comparant avec une liste-type de configurations mémorisée. Si elle ne l'est pas, on modifie la fréquence ou la phase de l'ensemble local SA qui pilote le centrage de la fenêtre, de façon à retrouver une ultérieurement.

Cette opération est effectuée ici directement en allant chercher dans une mémoire du type EPROM 16, à l'adresse désignée par le mot dans le troisième registre R3, des mots de 2 ou 4 bits par exemple, représentatifs la correction éventuelle à appliquer au facteur de division k du diviseur de fréquence 1. Un monostable 17 est connecté à la mémoire 16 et il délivre un signal LCK indiquant un calage correct de l'ensemble local de synchronisation SA par rapport au signal d'horloge reçu. Trois cas peuvent se produire:
a) la configuration obtenue n'est pas répertoriée, auquel cas on ne modifie pas le facteur de division k qui garde sa valeur précédente;
b) la configuration obtenue correspond à un bon centrage de la fenêtre et on annule l'écart d, s'il ne l'était pas déjà, le facteur k étant égal à k0; et
c) la configuration est répertoriée et l'on applique au facteur k la correction d qui est lue à la case de la mémoire EPROM, capable, en modifiant la fréquence ou la phase de l'horloge locale, de recentrer la fenêtre W sur le sommet M suivant du signal reçu.

Certaines configurations correspondent à des cas où l'horloge locale SA est en avance sur le signal d'horloge transmis. D'autres configurations encore correspondent à des cas où l'horloge locale est en retard. Les mots numériques issus de la mémoire 16 sont appliqués au diviseur 1 et ils déterminent la bonne variation comprise dans la fourchette ±d autour de la valeur k0 définie précédemment, à appliquer au facteur de division k pour rétablir le synchronisme.

La hauteur du seuil T+ et T- choisi pour sélectionner les sommets du signal peut être modifiée à volonté selon la qualité des signaux reçus. Il est possible par exemple pour un signal multi-niveaux de ne détecter que les passages du signal par le niveau maximal. La fréquence des opérations possibles de recentrage est ainsi diminuée mais en contrepartie le dispositif de sélection peut être simplifié du fait que les minima sont automatiquement exclus.

La détection de chaque maximum est effectué par le décodeur de signal 6. A la réception du signal de calage émis par le monostable 17, il déphase d'une demi-période le signal H3 marquant la succession des bauds, et acquiert par exemple l'échantillon de signal le plus proche du front montant du signal H3 décalé, marquant chaque instant ti (Fig.3).

La mémoire EPROM utilisée pour le stockage des corrections à appliquer au signal de l'horloge local SA, se prête bien et facilement à des modifications de la liste de configurations-types et des corrections éventuelles à apporter. On ne sortirait pas du cadre de l'invention toutefois en utilisant par exemple à la place, un processeur programmé pour effectuer les corrections requises.

La sensibilité du dispositif aux variations de déphasage entre les signaux de l'horloge locale et de l'horloge détectée sur la ligne L, est déterminée par l'écart ±d applicable au facteur de division k tous les bauds et donc tous les n.m.k périodes du signal H de l'horloge locale. Pour que l'incidence de la variation d=± 1 appliquée reste limitée (de l'ordre de 2% à 5%, il faut que le facteur k soit très grand, ce qui implique une fréquence très élevée pour le signal H. Il est cependant possible, de limiter cette fréquence à condition de n'appliquer la correction que toutes les n.m du signal H3 (périodes de baud) de façon à réduire dans la même proportion le facteur diviseur k.

## Revendications

1. Méthode pour régénérer à partir de signaux multi-niveaux captés sur une voie de transmission, un signal d'horloge rythmant la transmission sur cette voie, de données numérisées et codées, de façon à synchroniser sur lui une horloge locale (SA), comportant le positionnement d'un intervalle de temps ou fenêtre de lecture (W) de ces signaux par référence à l'horloge locale, **caractérisée en ce qu'**elle comporte le repérage des sommets (M) des signaux captés par détection sélective des instants (ti) où leur dérivée s'annule ou change de signe après une phase de croissance en valeur absolue de ces signaux, et le recentrage éventuel de la fenêtre de lecture sur ces instants par une modification de la fréquence ou de la phase du signal de l'horloge locale (SA).

2. Méthode selon la revendication 1, **caractérisée en ce que** ce repérage de ces sommets est effectué en :
- déterminant les écarts d'amplitude entre des échantillons prélevés sur les signaux durant des fenêtres de lecture successives (W), de façon à obtenir une configuration d'écarts correspondant à chacune de ces fenêtres,
- comparant chaque configuration d'écarts obtenue avec une liste de configurations-types d'écarts reconnues au préalable et répertoriées, correspondant à des fenêtres qui incluent des sommets (M); et
- recentrant éventuellement chaque fenêtre de lecture par application à la fréquence ou à la phase du signal de l'horloge locale (SA), d'une correction prédéterminée associée à chaque configuration-type de la liste, dans le cas où la configuration d'écarts obtenue correspond à une configuration-type répertoriée.

3. Méthode selon la revendication 1, **caractérisée en ce que** la modification de l'horloge locale (SA) est effectuée en réalisant l'étape de comparaison sur les seuls signaux reçus dont l'amplitude des dits sommets (M) est supérieure à une valeur-seuil (T+, T-).

4. Méthode selon la revendication 1, **caractérisée en ce que** la modification de l'horloge locale (SA) est effectuée en sélectionnant les sommets (M) dont l'amplitude est égale au plus haut niveau des signaux multi-niveaux émis sur la voie de transmission.

5. Méthode selon l'une des revendications précédentes, **caractérisée en ce qu'**elle comporte en outre une mesure de l'amplitude des signaux sensiblement à l'instant correspondant au milieu de chaque fenêtre centrée ou recentrée.

6. Méthode selon l'une des revendications précédentes, **caractérisée en ce qu'**elle comporte la modification de la fréquence ou de la phase du signal de l'horloge locale (SA) par l'application d'une correction (±d) à un facteur de division d'une fréquence de référence (H).

7. Méthode selon la revendication précédente, **caractérisé en ce qu'**elle comporte une sélection de la fréquence d'application de la correction à apporter au facteur de division (k).

8. Dispositif pour restituer des données numérisées à partir de signaux captés sur une voie de transmission (L), dont la transmission est rythmée par un signal d'horloge, de façon à synchroniser sur lui un ensemble de synchronisation ou horloge locale (SA), comportant des moyens (4) d'adaptation de l'amplitude des signaux captés et des moyens (5) d'échantillonnage et de numérisation des signaux durant des intervalles de temps ou fenêtres (W) de lecture de ces signaux déterminés par référence à l'horloge locale, et des moyens de centrage adapté à repérer des sommets (M) des signaux captés par détection des instants (ti) où leur dérivée s'annule, et à recentrer si nécessaire la fenêtre de lecture (W) sur ces instants par une modification de la fréquence ou de la phase du signal de l'horloge locale, **caractérisé en ce que** les moyens de centrage comportent un ensemble (7-13) pour former durant chaque fenêtre (W) une configuration d'écarts à partir des écarts d'amplitude entre des échantillons prélevés successivement sur les signaux durant la fenêtre et sélectionner des configurations d'écarts incluant un passage par une valeur de dérivée nulle succédant à une phase de croissance en valeur absolue des signaux, et des éléments de comparaison (14-16) pour comparer chaque ensemble d'écarts obtenu avec une liste de configurations-types d'écarts, et pour appliquer à la fréquence ou à la phase du signal de l'horloge locale (SA), une correction prédéterminée associée à chaque configuration-type de la liste.

9. Dispositif selon la revendication 8, **caractérisé en ce que** l'ensemble pour former les configurations d'écarts comporte des moyens (7, 8) de détermination du sens des écarts entre des échantillons successivement prélevés et numérisés et des moyens (9, 10) de repérage des maxima (M) en tenant compte du signe (sb) des échantillons numérisés.

10. Dispositif selon la revendication 8, **caractérisé en ce que** les éléments de comparaison de chaque ensemble d'écarts comportent des moyens de formation de mots numériques représentatifs de configurations d'écarts entre les échantillons prélevés dans une même fenêtre (W) et des moyens de mémorisation (16) pour des indications de correction à apporter à la fréquence ou la phase de l'horloge locale.

11. Dispositif selon l'une des revendications 8 à 10 **caractérisé en ce que** l'horloge locale (SA) comporte en série un premier élément de division (1) d'une fréquence de référence (H) par un facteur de division k ajustable, connecté aux dits moyens de comparaison, un deuxième élément de division (2) avec un facteur de division m produisant un signal (H2) à la fréquence de succession des bits et un troisième élément de division (3) avec un facteur de division n, produisant un signal (H3) à la fréquence de succession des bauds.

12. Dispositif selon l'une des revendications 8 à 11, **caractérisé en ce qu'**il comporte des moyens (11-13) de sélection des signaux dont l'amplitude excède une valeur-seuil fixée (T+, T-).

13. Dispositif selon l'une des revendications 8 à 12, **caractérisé en ce qu'**il comporte en outre des moyens de détection de l'amplitude des signaux reçus sensiblement à l'instant correspondant au milieu de la fenêtre centrée ou recentrée.

14. Dispositif selon l'une des revendications 8 à 13, **caractérisé en ce qu'**il comporte un indicateur de mise en phase ou verrouillage pour un système (6) d'exploitation des signaux validés.

## Patentansprüche

1. Verfahren zum Regenerieren, aus Mehrfachniveausignalen, die über einen Übertragungsweg erfasst sind, von einem Taktsignal, das die Übertragung auf diesem Weg von digitalisierten und kodierten Daten derart rhythmisiert, dass auf ihm ein lokaler Taktgeber (SA) synchronisiert wird, umfassend die Positionierung eines Zeitintervalls oder -fensters zum Lesen (W) dieser Signale durch Referenz zu einem lokalen Taktgeber, **dadurch gekennzeichnet, dass** es das Lokalisieren der Spitzen (M) der Signale, die durch selektive Detektion der Momente (ti), wo deren Ableitung Null wird, oder das Vorzeichen wechselt, nach einer Wachstumsphase des Absolutwerts dieser Signale erfasst sind, und die eventuelle Rezentrierung des Lesefensters auf diese Momente durch eine Modifikation der Frequenz oder der Phase des lokalen Taktsignals (SA) umfasst.

2. Verfahren nach Anspruch 1, **dadurch gekennzeichnet, dass** diese Lokalisierung der Spitzen durchgeführt wird, indem:
- die Amplitudenabstände zwischen den auf den Signalen entnommenen Proben während der aufeinanderfolgenden Lesefenster (W) derart bestimmt werden, dass eine Konfiguration von Abständen erhalten wird, die jedem dieser Fenster entspricht,
- jede Konfiguration von Abständen, die mit einer Liste von Konfigurationstypen von vorher bekannten und aufgelisteten Abständen erhalten wird, verglichen wird, welche den Fenstern entsprechen, die die Spitzen (M) einschließen; und
- gegebenenfalls jedes Lesefenster durch Anwendung auf die Frequenz oder die Phase des lokalen Taktsignals (SA) von einer vorbestimmten Korrektur, die jedem Konfigurationstyp der Liste zugeordnet ist, in dem Fall rezentriert wird, wo die erhaltene Konfiguration von Abständen einem aufgelisteten Konfigurationstyp entspricht.

3. Verfahren nach Anspruch 1, **dadurch gekennzeichnet, dass** die Modifikation des lokalen Taktgebers (SA) durchgeführt wird, indem die Stufe zum Vergleichen auf den einzelnen empfangenen Signalen durchgeführt wird, deren Amplitude dieser Spitzen (M) über einen bestimmten Schwellenwert (T+, T-) liegt.

4. Verfahren nach Anspruch 1, **dadurch gekennzeichnet, dass** die Modifizierung des lokalen Taktgebers (SA) unter Auswahl der Spitzen (M) durchgeführt wird, deren Amplitude gleich oder auf dem höchsten Niveau der Mehrfachniveausignale ist, die auf den Übertragungsweg ausgesandt werden.

5. Verfahren nach einem der vorhergehenden Ansprüche, **dadurch gekennzeichnet, dass** es außerdem eine Messung der Amplitude der Signale im wesentlichen im dem Moment umfasst, der der Mitte jedes zentrierten oder rezentrierten Fensters entspricht.

6. Verfahren nach einem der vorhergehenden Ansprüche, **dadurch gekennzeichnet, dass** es die Modifikation der Frequenz oder der Phase des lokalen Taktsignals (SA) durch Anwendung einer Korrektur (±d) bei einem Divisionsfaktor von einer Referenzfrequenz (H) umfasst.

7. Verfahren nach dem vorhergehenden Anspruch, **dadurch gekennzeichnet, dass** es eine Auswahl der Frequenz zur Anwendung der Korrektur umfasst, die auf den Divisionsfaktor (k) anzubringen ist

8. Vorrichtung zum Wiederherstellen der digitalisierten Daten, ausgehend von Signalen, die über einen Übertragungsweg (L) aufgenommen werden, dessen Übertragung durch ein Taktsignal rhythmisiert ist, derart, dass auf ihm eine Synchronisierungsanordnung oder lokaler Taktgeber (SA) synchronisiert wird, umfassend Mittel (4) zur Anpassung der Amplitude der erfassten Signale und Mittel (5) zur Probennahme und Digitalisierung der Signale während der Zeitintervalle oder -fenster (W) zum Lesen dieser durch eine Referenz zu dem lokalen Taktgeber bestimmten Signale und Mittel zu einer Zentrierung, die ausgelegt ist, um Spitzen (M) der Signale ausfindig zu machen, die durch Detektion der Momente (ti) erfasst sind, wo deren Ableitung Null wird, und um, wenn nötig, das Lesefenster (W) auf diese Momente durch eine Modifikation der Frequenz oder der Phase des lokalen Taktsignals zu rezentrieren, **dadurch gekennzeichnet, dass** die Mittel zum Zentrieren eine Anordnung (7-13) umfassen, um während jedes Fensters (W) eine Konfiguration von Abständen, ausgehend von den Amplitudenabständen zwischen den aufeinanderfolgenden auf den Signalen während des Fensters entnommenen Proben zu bilden und Konfigurationen von Abständen auszuwählen, die einem Durchgang durch einen Nullableitungswert einschließen, der einer Wachstumsphase des Absolutwertes der Signale folgt, und umfassend Elemente zum Vergleichen (14-16), um jede Gesamtheit von Abständen zu vergleichen, die mit einer Liste von Konfigurationstypen von Abständen erhalten wird, und, um auf die Frequenz oder die Phase des lokalen Taktsignals (SA) eine vorbestimmte Korrektur anzuwenden, die mit jedem Konfigurationstyp der Liste verbunden ist.

9. Vorrichtung nach Anspruch 8, **dadurch gekennzeichnet, dass** die Anordnung zur Bildung der Konfiguration von Abständen Mittel (7, 8) zur Bestimmung der Richtung der Abstände zwischen den aufeinanderfolgenden entnommenen und digitalisierten Proben und Mittel (9, 10) zum Aufspüren der Maxima (M) unter Berücksichtigung des Vorzeichens (sb) der digitalisierten Proben umfasst.

10. Vorrichtung nach Anspruch 8, **dadurch gekennzeichnet, dass** die Elemente zum Vergleichen jeder Anordnung von Abständen Mittel zur Bildung von digitalen Worten umfassen, die repräsentativ für Konfigurationen von Abständen zwischen den in einem selben Zeitfenster (W) entnommenen Proben sind, sowie Speichermittel (16) für Korrekturindikationen, die auf die Frequenz oder die Phase des lokalen Taktgebers anzubringen sind.

11. Vorrichtung nach einem der Ansprüche 8 bis 10, **dadurch gekennzeichnet, dass** der lokale Taktgeber (SA) in Reihe ein erstes Teilerelement (1) einer Referenzfrequenz (H) durch einen einstellbaren Teilerfaktor k verbunden mit den Vergleichsmitteln, ein zweites Teilerelement (2) mit einem Teilerfaktor m, der ein Signal (H2) zur Frequenz einer Folge der Bits erzeugt, und ein drittes Teilerelement (3) mit einem Teilerfaktor n umfasst, der ein Signal (H3) zur Frequenz einer Folge der Bauds erzeugt.

12. Vorrichtung nach einem der Ansprüche 8 bis 11, **dadurch gekennzeichnet, dass** sie Mittel (11-13) zur Auswahl der Signale umfasst, deren Amplitude einen festen Schwellenwert (T+, T-) überschreitet.

13. Vorrichtung nach einem der Ansprüche 8 bis 12, **dadurch gekennzeichnet, dass** sie im übrigen Mittel zur Detektion der Amplitude der Signale umfasst, die im wesentlichen bei dem Moment empfangen werden, der der Mitte des zentrierten oder rezentrierten Fensters entspricht.

14. Vorrichtung nach einem der Ansprüche 8 bis 13, **dadurch gekennzeichnet, dass** sie einen Indikator zum In-Phase-Bringen oder zur Randwertschaltung für ein Untersuchungssystem (6) der bestätigten Signale umfasst.

## Claims

1. Method for regenerating a clock signal from multi-level signals picked up on a transmission channel, said clock signal clocking the transmission of digitised and coded data on this channel, so as to synchronise a local clock (SA) on it, comprising positioning of an interval of time or window (W) for reading these signals by reference to the local clock, **characterised in that** it comprises identification of the peaks (M) of the signals picked up by selective detection of the instants (ti) at which their derivative is eliminated or changes sign after a phase of absolute growth in value of these signals, and possible recentring of the reading window on these instants by modification of the frequency or the phase of the signal of the local clock (SA).

2. Method according to claim 1, **characterised in that** this identification of these peaks is effected by:
- determining the deviations in amplitude between samples taken from the signals during successive reading windows (W) so as to obtain a configuration of deviations corresponding to each of these windows,
- comparing each configuration of deviations obtained with a list of previously recognised and listed typical configurations of deviations corresponding to windows which include peaks (M), and
- possibly recentring each reading window by application of a predetermined correction associated with each typical configuration in the list to the frequency or the phase of the signal of the local clock (SA) when the configuration of deviations obtained corresponds to a listed typical configuration.

3. Method according to claim 1, **characterised in that** the modification of the local clock (SA) is effected by carrying out the comparison step solely on the signals received for which the amplitude of said peaks (M) is greater than a threshold value (T+, T-).

4. Method according to claim 1, **characterised in that** the modification of the local clock (SA) is effected by selecting the peaks (M) the amplitude of which is equal to the highest level of the multi-level signals transmitted on the transmission channel.

5. Method according to one of the preceding claims, **characterised in that** it additionally comprises measurement of the amplitude of the signals substantially at the instant corresponding to the middle of each centred or recentred window.

6. Method according to one of the preceding claims, **characterised in that** it comprises modification of the frequency or the phase of the signal of the local clock (SA) by application of a correction (±d) to a division factor for a reference frequency (H).

7. Method according to the preceding claim, **characterised in that** it comprises selection of the frequency for application of the correction to be made to the division factor (k).

8. Device for reconstituting digitised data from signals picked up on a transmission channel (L), the transmission of which is clocked by a clock signal, so as to synchronise a synchronisation unit or local clock (SA) on it, comprising means (4) for adapting the amplitude of the signals picked up and means (5) for sampling and digitising the signals during intervals of time or windows (W) for reading these signals determined by reference to the local clock, and means for centring adapted to identify peaks (M) of the signals picked up by detecting the instants (ti) at which their derivative is eliminated, and if necessary to recentre the reading window (W) on these instants by modification of the frequency or the phase of the signal of the local clock, **characterised in that** the means for centring comprise a system (7-13) for forming a configuration of deviations during each window (W) from deviations in amplitude between samples taken successively from the signals during the window, and selecting configurations of deviations including passage through a zero derivative value following a phase of absolute growth in value of the signals, and comparison elements (14, 16) for comparing each set of deviations obtained with a list of typical configurations of deviations, and for applying a predetermined correction associated with each typical configuration in the list to the frequency or the phase of the signal of the local clock (SA).

9. Device according to claim 8, **characterised in that** the system for forming the configurations of deviations comprises means (7, 8) for determining the direction of the deviations between samples successively taken and digitised, and means (9, 10) for identifying the maxima (M) taking account of the sign (sb) of the digitised samples.

10. Device according to claim 8, **characterised in that** the comparison elements for each set of deviations comprise means for forming digital words representative of configurations of deviations between the samples taken in a first window (W) and storage means (16) for corrections to be made to the frequency or the phase of the local clock.

11. Device according to one of claims 8 to 10, **characterised in that** the local clock (SA) comprises in series a first element (1) for division of a reference frequency (H) by an adjustable division factor (k), connected to said comparison means, a second element (2) for division with a division factor m producing a signal (H2) at the frequency of succession of the bits, and a third element (3) for division with a division factor n producing a signal (H3) at the frequency of succession of the bauds.

12. Device according to one of claims 8 to 11, **characterised in that** it comprises means (11-13) for selection of the signals the amplitude of which exceeds a fixed threshold value (T+, T-).

13. Device according to one of claims 8 to 12, **characterised in that** it additionally comprises means for detecting the amplitude of the signals received substantially at the instant corresponding to the middle of the centred or recentred window.

14. Device according to one of claims 8 to 13, **characterised in that** it comprises a phasing or locking indicator for a system (6) using the validated signals.
